# EUROPÄISCHE PATENTSCHRIFT

(11) **EP 1 411 254 B1**
(45) Veröffentlichungstag und Bekanntmachung des Hinweises auf die Patenterteilung: **05.01.2011**
(21) Anmeldenummer: 03023373.8
(22) Anmeldetag: 16.10.2003
(51) Int. Cl.: F16C 13/00, D21G 1/00, F16F 15/14

(54) **Mittelwalze eines Kalanders mit einer Tilgeranordnung**
Middle roll of a calender with a damper assembly having an inertial mass
Cylindre médial de calandre avec amortisseur comprennant un masse d'inertie

(30) Priorität: 17.10.2002 DE 10248519
(43) Veröffentlichungstag der Anmeldung: 21.04.2004
(73) Patentinhaber: Voith Patent GmbH, 89522 Heidenheim (DE)
(72) Erfinder: van Haag, Rolf, Dr.-Ing, 47647 Kerken (DE)

(56) Entgegenhaltungen:
- EP-A- 0 585 897
- EP-A- 1 146 249
- DE-A- 3 011 384
- DE-A- 3 632 418
- DE-A- 10 008 800
- DE-A- 19 726 293
- DE-B- 1 181 560
- DE-U- 9 301 059
- GB-A- 1 187 326
- US-A- 5 257 965
- US-A- 5 595 117
- PATENT ABSTRACTS OF JAPAN vol. 010, no. 167 (M-488), 13. Juni 1986 (1986-06-13) -& JP 61 018658 A (MITSUBISHI JUKOGYO KK), 27. Januar 1986 (1986-01-27)

## Beschreibung

Die Erfindung betrifft eine Kalandermittelwalze mit einem Walzenmantel, der einen Innenraum umgibt. Ferner betrifft die Erfindung einen Kalander mit einem Walzenstapel, der mindestens zwei Mittelwalzen aufweist, von denen mindestens eine einen Walzenmantel aufweist, der einen Innenraum umgibt.

Eine derartige Kalandermittelwalze ist aus DE 100 08 800 A1 bekannt. Sie weist einen aktiven Tilger auf, der über Sensoren in einem Regelkreis gesteuert werden kann.

Kalander und Mittelwalzen der infrage stehenden Art werden verwendet, um Papier- oder Kartonbahnen zu satinieren. Dabei werden diese Bahnen durch Nips geleitet, die zwischen einander benachbarten Walzen gebildet sind und in diesen Nips mit erhöhtem Druck und in der Regel auch mit erhöhter Temperatur beaufschlagt. Die Nips sind dabei als sogenannte "weiche" Nips ausgebildet, die begrenzt sind durch eine harte Walze mit glatter Oberfläche und eine weiche Walze. Die harte Walze ist in der Regel aus Metall gebildet, wobei auch die Oberfläche aus Metall gebildet ist. Die damit zusammenwirkende "weiche" Walze weist eine vergleichsweise weichere Oberfläche auf. Diese Oberfläche ist in der Regel durch einen Kunststoffbelag gebildet, der auf einen Walzenkörper aufgebracht sein kann, wobei der Walzenkörper selbst ebenfalls aus Metall bestehen kann.

Der Walzenstapel weist normalerweise zwei Endwalzen auf, von denen mindestens eine, in der Regel aber beide, als Durchbiegungseinstellwalzen ausgebildet sind. Die Durchbiegungseinstellwalzen weisen einen umlaufenden Walzenmantel auf, der mit Hilfe von hydraulischen Stützelementen so beaufschlagt sein kann, daß eine gewünschte Biegelinie, vorzugsweise eine gestreckte Linie, in den Nips erzeugt wird. Die zwischen den beiden Endwalzen befindlichen Mittelwalzen sind weniger aufwendig gebildet. Sie bestehen in der Regel aus einem Walzenmantel, der einen Innenraum umschließt. Der Innenraum ist an den Stirnseiten durch Walzenzapfen verschlossen.

Bei derartigen Kalandern kann man nach einer gewissen Betriebszeit regelmäßig beobachten, daß sich eine Barring-Bildung ergibt. Die Barrings sind Streifen, die quer zur Laufrichtung der Bahn verlaufen. Sobald diese Streifen sichtbar werden, ist die Papier- oder Kartonbahn Ausschuß, der entsorgt werden muß.

Die Entstehungsmechanismen dieser Barring-Bildung sind noch nicht abschließend geklärt. Man nimmt an, daß es sich um selbsterregte Schwingungen handelt, die durch Materialverschleiß die weichen Walzen im Laufe der Zeit "vieleckig" machen, vereinfacht ausgedrückt also ein Wellenmuster auf die Oberfläche der weichen Walzen einprägen. Ein Walzenstapel, der aus mehreren Walzen gebildet ist, hat eine Vielzahl von Eigenfrequenzen. Hierbei sind nicht die Eigenfrequenzen der einzelnen Walzen für sich, wie etwa Biegeeigenfrequenzen, gemeint, sondern die Eigenschwingungsformen, die sich aus den schwingenden Walzenmassen auf den Feder- und Dämpfersystemen der dazwischengeschalteten Kunststoffbeläge ergeben.

Ein laufender Kalander erzeugt Erregerkräfte, deren Frequenzen sich aus den Vielfachen der Walzendrehzahlen zusammensetzen. Diese Erregerkräfte können in Inhomogenitäten, Anisotropien oder Geometriefehlern (Unrundheiten) begründet sein. Ebenfalls können Papierdickenschwankungen der in den Kalander einlaufenden Papier- öder Kartonbahn den Walzenstapel anregen. Eine in den Kalander einlaufende Papierbahn ist vor dem Satinageprozeß noch relativ rauh. Zudem ist eine Papier- oder Kartonbahn normalerweise nicht frei von Flächengewichts- oder Dickenschwankungen. Wenn nun eine wie immer begründete Erregerfrequenz auf eine Eigenfrequenz des Walzenstapels trifft, so antwortet das Schwingungssystem mit vergrößerten Schwingungsausschlägen. Aufgrund der Vielzahl der möglichen Erreger und der Vielzahl der möglichen Eigenschwingungsformen lassen sich Resonanzstellen in der Regel nicht konstruktiv umgehen. Normalerweise ist das Schwingungssystem auch so stark gedämpft und die Erregerkräfte sind so klein, daß die resultierenden Schwingungsbewegungen unmittelbar nicht stören. Über einen mehr oder weniger langen Zeitraum prägen sich diese Schwingbewegungen jedoch in die Kunststoffbeläge der elastischen Walzen ein, was nach einer gewissen Betriebsdauer zu der oben geschilderten Barring-Bildung führt. Meist vergehen einige Tage oder Wochen, bis diese Erscheinung so stark angewachsen ist, daß sie den Produktionsprozeß stört. Die Walze muß dann ausgebaut und überarbeitet werden, was einen erheblichen Aufwand bedeutet. Die Überarbeitung kann beispielsweise darin bestehen, daß die Walze wieder auf eine runde Form geschliffen wird.

DE 30 11 384 A1 zeigt eine Vorrichtung zum Bedrucken einer endlosen Materialbahn zumindest eine Walze des Druckwerks weist eine Tilgermasse auf, die über Federelemente frei schwingend mit der Walze gekoppelt ist und als zylindrischer Körper ausgebildet ist. Sie kann mit einer sie im Abstand konzentrisch umgebenden Hülse frei schwingend gekoppelt sein. Als Federelemente kommen beispielsweise aus einem elastischen Material bestehende Scheiben in Frage. Die Eigenfrequenz dieses Tilgers soll optimal auf die Eigenfrequenz der Walze abgestimmt sein.

US 5 595 117 A zeigt eine Vorrichtung und ein Verfahren zur Dämpfung von Biegeschwingungen von Zylindern in einer Druckmaschine. Die Schwingungen werden dabei dadurch hervorgerufen, dass die Zylinder Befestigungsspalten aufweisen, die zu Stößen beim Abrollen der Zylinder führen, die mit einer von der Zylinderdrehzahl abhängigen Erregerfrequenz aufeinander folgen. Die Zylinder können als Hohlwalzen ausgebildet sein, wobei deren Walzenmantel einen Innenraum umgibt. In diesem Innenraum kann eine Tilgeranordnung angeordnet werden, die eine bewegliche Masse aufweist. Die Eigenfrequenz des Zylinders soll dabei exakt mit der natürlichen Frequenz der Zylinderanordnung übereinstimmen.

JP 61 018 658 A zeigt eine Dämpfungswalze, die auf einen freien Zug eines Streifens einwirken soll. Hierzu ist die Walze über Lager an Federn aufgehängt. In der Walze ist eine Dämpfungsmasse angeordnet, die über ein Kabel gehalten ist. Das Kabel kann an seinen beiden axialen Enden gespannt werden, indem eine Mutter angezogen oder gelöst wird.

GB 1 187 326 A zeigt eine Walze einer Fourdrinier-Maschine, bei der ein Walzenmantel auf einem Träger drehbar angeordnet ist. Zwischen dem Mantel und dem Träger sind Tragringe angeordnet. Zwischen den Tragringen und dem Mantel wird eine Flüssigkeit eingespeist, auf der sich der Walzenmantel frei drehen kann. Alternativ dazu können auch Kugellager zum Abstützen des Walzenmantels verwendet werden. Im hohlen Innenraum des Trägers ist ein Dämpfungspaddel angeordnet, das an zwei parallelen Stangen aufgehängt ist. Das Dämpfungspaddel erzeugt zusammen mit dem hohlen Träger Spalten, durch die Flüssigkeit treten muss, um eine dämpfende Wirkung zu bewirken. Die Federeigenschaften der Stangen und/oder die Länge des Paddels wird so eingestellt, dass sich dieselbe Eigenfrequenz wie die Walze ergibt.

US 5 257 965 A zeigt eine Walze zur Druckbehandlung von Bahnen. Diese Walze ist aus mehreren Abschnitten gebildet, die in axialer Richtung zusammengesetzt sind. Um die Abschnitte aneinander zu halten, kann entweder die Walzenachse unter eine Zügspannung gesetzt werden oder es können getrennte Zuganker vorgesehen sein.

Der Erfindung liegt die Aufgabe zugrunde, die Standzeit einer Walze auf einfache Weise zu verlängern.

Diese Aufgabe wird bei einer Mittelwalze der eingangs genannten Art dadurch gelöst, daß im Innenraum eine Tilgeranordnung mit mindestens einem passiven Schwingungstilger angeordnet ist, wobei der Schwingungstilger eine Tilgerfrequenz aufweist, die unterhalb einer für eine Barring-Bildung ausschlaggebenden Eigenfrequenz der Walze oder eines die Walze enthaltenden Walzensystems liegt.

Man geht dabei davon aus, daß die Walze selbst im Betrieb schwingt. Diese Schwingung wird durch die Tilgeranordnung gedämpft. Dadurch werden die Auswirkungen der Schwingung abgeschwächt. Durch diese Abschwächung wird die Standzeit der Walze verlängert, d.h. der Zeitraum wird verlängert, in dem die Walze noch betrieben werden kann, ohne daß sich eine Barring-Bildung zeigt. Wenn die Tilgeranordnung im Innenraum angeordnet ist, kann sie unmittelbar auf die Schwingungen der Walze reagieren und auf die Walze einwirken. Es ist also nicht erforderlich, hier einen Umweg zu gehen, beispielsweise über Lagerstellen der Walze oder über externe Tilger, deren Kräfte auf andere Weise in die Walze eingekuppelt werden müssen. Dies hält den Aufwand für die Tilgeranordnung relativ klein. Da der Schwingungstilger als passiver Schwingungstilger ausgebildet ist, müssen keine externen Kräfte erzeugt oder Energien von außen zugeführt werden. Der Schwingungstilger reagiert vielmehr nur auf die Schwingungen der Walze und dämpft sie ab. Je nach Dämpfung ergibt sich dabei auch eine Phasenverschiebung, was die Ausbildung von Barrings weiter verzögern kann. Es ist hierbei nicht unbedingt erforderlich, daß die Schwingungen restlos beseitigt werden. Man nimmt durchaus in Kauf, daß nach einer gewissen Betriebszeit, die allerdings wesentlich länger als ohne Tilgeranordnung ist, eine Überarbeitung der Walze erforderlich werden kann. Erfindunsgemäß weist der Schwingungstilger, wie oben definiert, eine bestimmte Tilgerfrequenz auf. Bei der Verwendung von mehreren Einzeltilgern gilt dies für die sich daraus ergebenden Eigenfrequenzen. Man legt den Tilger also wie folgt aus: Man ermittelt durch Berechnung oder Messung die Kontakteigenfrequenz unter Berücksichtigung oder Ermittlung (im Fall der Messung) der Strukturdämpfung. Man berechnet das nächstliegende ganzzahlige Vielfache der Walzendrehzahlen unterhalb einer Kontakteigenfrequenz. Dabei ist je nach Schwingungsform zwischen geraden und ungeraden ganzzahligen Vielfachen zu unterscheiden. Je nach Höhe der vorliegenden Strukturdämpfung müssen nächstliegende Vielfache unterhalb der Kontakteigenfrequenz übersprungen werden. Wenn beispielsweise die ungedämpfte Kontakteigenfrequenz fe = 351,5 Hz ist und die Walzendrehzahl fw = 8 Hz, dann ergibt sich ein Verhältnis fe/fw = 351,5 Hz / 8 Hz = 43,9375. In diesem Fall würden sich 43 Wellen auf dem Umfang der Walze ausbilden. In Abhängigkeit von der Systemdämpfung bilden sich unterschiedliche Wellenanzahlen aus. Bei einem Systemdämpfungsgrad D = 0,005 ergeben sich, wie erwähnt, 43 Wellen. Bei einem Systemdämpfungsgrad D = 0,02 ergeben sich 41 Wellen und bei einem Systemdämpfungsgrad D = 0,05 ergeben sich 39 Wellen. Dieses Verhalten ist durch den dämpfungsgradabhängigen Phasenwinkel zwischen der Barring-bedingten Wegerregung und des Systemverhaltens der Walzenantwort zu begründen. Die Eigenfrequenzen der einzelnen Schwingungstilger werden nun auf die zu erwartende Frequenz ausgelegt. Damit ergibt sich ein hervorragendes Dämpfungsverhalten.

Vorzugsweise wirkt der Schwingungstilger auf den Walzenmantel. Damit wirkt er auf den Teil der Walze, der unmittelbar von den Schwingungen betroffen ist. Die Dämpfung, die der Schwingungstilger hervorruft, wirkt also gleich an der "richtigen" Stelle. Die Schwingungen werden also dort gedämpft, wo sie in oder an der Walze merkbar sind.

In einer bevorzugten Ausgestaltung ist vorgesehen, daß der Schwingungstilger eine Masse aufweist, die mindestens 15 %, insbesondere mindestens 20 % der Masse des Walzenmantels beträgt. Durch die Verwendung von relativ schweren Schwingungstilgern verschieben sich die Eigenfrequenzen nach unten. Abschätzungen zeigen, daß mit solchen schweren Einbauten, die mindestens 15 % der ansonsten schwingenden Masse betragen, längere Standzeiten der Walzen zu erzielen sind.

Vorzugsweise ist der Schwingungstilger in Axialrichtung des Walzenmantels an einer Position angeordnet, an der sich im Betrieb ein Schwingungsbauch ausbildet. Zu den Schwingungen, die die Walze ausführt und die letztendlich zu der Barring-Bildung führen, gehören Eigenformen. Diese Eigenformen liegen meist in einem Frequenzbereich, bei dem die Walzenmäntel (auch als Walzenschalen bezeichnet) schon in Oberschwingungsformen schwingen, ähnlich wie die Seite eines Musikinstruments. Über die axiale Länge des Walzenmantels verteilt ergeben sich also mehrere Schwingungsbäuche, beispielsweise drei bis sieben Schwingungsbäuche. Wenn man nun einen passiven Schwingungstilger an der Position anordnet, wo sich im Betrieb ein Schwingungsbauch ausbildet, dann hat dieser Schwingungstilger im Grunde die beste Wirkung. Er trifft auf die größte Schwingungsamplitude und kann diese dann sehr wirkungsvoll dämpfen. Die Schwingungsbäuche lassen sich beispielsweise vor der Inbetriebnahme der Walze berechnen. Ein besonders einfaches Verfahren besteht aber darin, die Walze bis in den Bereich einer Barring-Bildung fahren zu lassen, in dem die Schwingungsbäuche und die Schwingungsknoten ausreichend hervortreten und damit sichtbar sind. An der axialen Position eines derartigen Schwingungsbauchs kann man dann den passiven Schwingungstilger in der Walze installieren.

Vorzugsweise ist der Schwingungstilger in mehrere Einzeltilger unterteilt, die in Axialrichtung verteilt an Positionen angeordnet sind, an denen sich im Betrieb jeweils ein Schwingungsbauch ausbildet. In vielen Fällen wird es zwar ausreichen, einen passiven Schwingungstilger zu verwenden, beispielsweise im Bereich eines Schwingungsbauchs, der sich in der axialen Mitte der Walze ausbildet. Eine verbesserte Dämpfungswirkung ergibt sich jedoch dadurch, daß man an mehreren Schwingungsbäuchen oder, wie in einer besonders bevorzugten Ausgestaltung vorgesehen, an allen Schwingungsbäuchen einen Einzeltilger anordnet. Es ist dabei nicht einmal erforderlich, das Maximum des Schwingungsbauchs genau zu treffen. Eine Dämpfungswirkung ergibt sich bereits dann, wenn der Schwingungstilger im Bereich des Schwingungsbauchs angeordnet ist. Die Feststellung, wo die Position des Schwingungsbauchs liegt, kann also mit einer vergleichsweise geringen Genauigkeit erfolgen. Bei mehreren Einzeltilgern wird die Masse der Einzeltilger addiert.

Es ist bevorzugt, daß die Tilgerfrequenz auf eine Barring-Frequenz abgestimmt ist. Man ermittelt also zusätzlich, bei welcher der obengenannten Frequenzen die Barring-Bildung am stärksten ist und stimmt die Tilgerfrequenz des Schwingungstilgers darauf ab. Je nach Systemdämpfungsgrad können sich andere zu erwartende Barring-Frequenzen ergeben. Die Tilgerfrequenz des Schwingungstilgers sollte dann auf diese Barring-Frequenz abgestimmt sein.

Bevorzugterweise ist der Schwingungstilger als walzenförmiger Einschubkörper ausgebildet. Mit einem walzenförmigen Einschubkörper kann man auf einfache Weise relativ schwere Einbauten realisieren, so daß man die mindestens 15 % der ansonsten schwingenden Masse problemlos erreichen kann. Ein walzenförmiger Einbaukörper läßt sich auch leicht im Walzenmantel positionieren und befestigen. Man kann in einem konkreten Problemfall die Barring-Frequenz durch Vermessen einer oder mehrerer Walzen direkt ermitteln. Danach kann man die zu erwartenden neuen Eigenfrequenzen unter Berücksichtigung der Zusatzmassen der Schwingungstilger, beispielsweise der walzenförmigen Einschubkörper, berechnen. Auch hier wird man dann die nächstliegenden ganzzahligen Vielfachen der Walzendrehzahlen unterhalb der zu erwartenden neuen Kontakteigenfrequenzen berechnen. Dabei ist je nach Schwingungsform zwischen geraden und ungeraden ganzzahligen Vielfachen zu unterscheiden. Man legt nun die Eigenfrequenz der einzelnen Schwingungstilger auf diese zu erwartende Barring-Frequenz (Walzendrehzahl mal Wellenzahl) aus. Auch ein walzenförmiger Einschubkörper kann gezielt über die Länge geteilt werden. Ein ungeteilter Einschubkörper kann im Einzelfall sinnvoll sein, wenn die Walze sich vornehmlich wie ein Starrkörper bewegt. Ansonsten ist es sinnvoll, die Aufteilung des Einschubkörpers in mehrere Einzeltilger vorzunehmen.

Vorzugsweise ist der Schwingungstilger über eine vorzugsweise isotrope Federanordnung im Walzenmantel abgestützt. Die Eigenfrequenz dieses Feder-Masse-Systems (Tilger) ist auf eine Problem- oder Erregerfrequenz des Walzensystems hin abgestimmt. Durch eine erhöhte Schwingbewegung der Tilgermasse in dieser Problemfrequenz wird das Walzensystem beruhigt.

Hierbei ist bevorzugt, daß die Federanordnung mehrere Tellerfedern aufweist. Die Federanordnung kann also relativ steif ausgebildet sein.

Auch ist von Vorteil, daß zwischen dem Schwingungstilger und dem Walzenmantel eine Dämpferanordnung vorgesehen ist. Die Schwingungen des Schwingungstilgers gegenüber dem Walzenmantel können dann gezielt gedämpft werden, so daß man eine breitbandige Schwingungsunterdrükkung durch den Schwingungstilger erzielen kann.

Hierbei ist bevorzugt, daß die Dämpferanordnung und die Federanordnung miteinander kombiniert sind. Dies läßt sich beispielsweise dadurch erreichen, daß man Federn verwendet, die eine hohe Eigendämpfung aufweisen. Dies ist beispielsweise bei den oben erwähnten Tellerfedern der Fall.

Ebenfalls möglich ist es, die Tilgermasse ohne eine Feder über Dämpfungselemente an den Walzenmantel zu koppeln. Diese Ausführungsform ist zwar nicht so wirkungsvoll wie ein korrekt abgestimmtes Feder-Masse-Dämpfer-System, zeigt aber auch eine Verminderung der Barring-Neigung.

Auch ist bevorzugt, daß der Schwingungstilger über mindestens eine Stütze aus elastomerem Material am Walzenmantel abgestützt ist. Elastomere Materialien haben eine relativ hohe Eigendämpfung, obwohl sie im übrigen ausreichende Federeigenschaften aufweisen.' Die Verwendung einer Stütze aus elastomerem Material kombiniert daher Federeigenschaften und Dämpfereigenschaften.

Vorzugsweise ist der Schwingungstilger gegenüber dem Walzenmantel in einem rotatorischen Freiheitsgrad bewegbar. Dies ist vor allem dann von Interesse, wenn Eigenformen entstehen, bei denen die Kunststoffbeläge der Walzen auf Schub beansprucht werden. In diesem Fall ist es sinnvoll, den walzenförmigen Einschubkörper oder dessen Teile hinsichtlich ihres rotatorischen Freiheitsgrades als Tilger auszulegen. Hierzu muß die Verdrehsteifigkeit und/oder die Dämpfung auf die rotatorische Eigenfrequenz des Walzenmantels hin abgestimmt werden.

Hierbei ist bevorzugt, daß die Drehbewegung des Schwingungstilgers gegenüber dem Walzenmantel begrenzt ist. Man läßt also lediglich eine Torsionsschwingung des Schwingungstilgers im Walzenmantel zu, nicht eine vollständige Drehung. Dies erleichtert zum einen die Befestigung des Schwingungstilgers im Walzenmantel, erlaubt aber zum anderen auch eine verbesserte Schwingungsdämpfung.

Auch ist von Vorteil, wenn der Innenraum zumindest in einem Bereich zwischen dem Schwingungstilger und dem Walzenmantel mit einer Flüssigkeit gefüllt ist, deren Viskosität ein vorbestimmtes Mindestmaß überschreitet. Man kann beispielsweise einen Ringspalt zwischen dem walzenförmigen Einschubkörper und dem Walzenmantel mit einem zähflüssigen Öl zur Einstellung der Dämpfungseigenschaften füllen. Wenn sich dann der Schwingungstilger in den Walzenmantel bewegt, muß dieses Öl verdrängt und verlagert werden, was eine verbesserte Dämpfung ergibt.

In einer alternativen Ausgestaltung ist vorgesehen, daß der Schwingungstilger mit einer umschließenden Zwischenschicht aus einem viskoelastischen Material in den Walzenmantel eingeschrumpft ist. Das viskoelastische Material übernimmt sowohl die Federeigenschaften als auch in gewisser Hinsicht Dämpfungseigenschaften. Das Einschrumpfen ist eine relativ einfache und dennoch zuverlässige Möglichkeit, den Schwingungstilger im Walzenmantel zu befestigen.

Hierbei ist bevorzugt, daß zwischen dem Walzenmantel und der Zwischenschicht ein Rohr angeordnet ist. Dies erleichtert die Fertigung. Wenn die Zwischenschicht mit dem Rohr versehen ist, dann hat man vor dem Einschrumpfen einen Schwingungstilger, der kompakt ist und ohne besondere Vorsichtsmaßnahmen in den erhitzten Walzenmantel eingesetzt werden kann. Zusätzlich kann man das Rohr auch noch abkühlen, vor allem dann, wenn es aus Metall ist. Nach einem Temperaturausgleich sitzt dann der Schwingungstilger fest im Walzenmantel.

Vorzugsweise weist der Schwingungstilger ein Massenelement auf, das in mindestens einer Scheibe aus einem elastischen Material gelagert ist, die am Mantel abgestützt ist. Die Scheibe aus elastischem Material bildet dann sowohl die Feder als auch das Dämpfungsglied für den Schwingungstilger. Das Massenelement ist durch lokale Kompression oder Expansion der Scheibe verlagerbar. Über die Elastizität der Scheibe läßt sich die Tilgerfrequenz in gewissen Bereichen einstellen. Auch eine gewisse rotatorische Bewegung des Schwingungstilgers gegenüber dem Walzenmantel ist in begrenztem Umfang möglich.

Vorzugsweise liegt die Scheibe über ihren gesamten Umfang am Mantel an. Prinzipiell würde es zwar ausreichen, die Scheibe in einigen Punkten, beispielsweise drei Punkten, am Walzenmantel abzustützen. Wenn die Scheibe jedoch über den gesamten Umfang am Walzenmantel anliegt, dann ist die Kraftübertragung von der Richtung der Erregung bzw. der Antwort des Schwingungstilgers vollkommen unabhängig. Es lassen sich also verbesserte Ergebnisse erzielen. Über den Schwingungstilger werden keine neuen Inhomogenitäten in die Walze eingetragen, die zu einer weiteren Schwingungsbildung führen könnten.

Vorzugsweise ragt das Massenelement in Axialrichtung über die Scheibe hinaus. Damit kann das Massenelement eine größere Masse aufweisen, als es eigentlich der Raum innerhalb der Scheibe gestatten würde. Hinzu kommt, daß dadurch eine gewisse Neigungsmöglichkeit des Massenelements gegenüber der Walzenachse gegeben ist, d.h. das Massenelement muß nicht immer parallel zum Walzenmantel ausgerichtet sein. Dies erweitert die Dämpfungsmöglichkeiten.

Vorzugsweise weist das Massenelement jeweils außerhalb der Scheibe eine Vergrößerung auf. Das Massenelement ist also hantelförmig ausgebildet mit zwei "Gewichten" an den Enden und einer Lagerung in der Scheibe, die an der Verbindungsstange zwischen den beiden "Gewichten" angreift. Durch die Vergrößerungen an den Enden läßt sich eine weitere Vergrößerung der Masse des Massenelements erreichen. Damit läßt sich der Frequenzbereich vergrößern, in dem der Schwingungstilger arbeiten kann.

Vorzugsweise weist der Schwingungstilger eine von außen veränderbare Tilgerfrequenz auf. In der Regel wird man den Schwingungstilger auf eine konkrete Eigenfrequenz des Walzensystems und die damit verbundene Barring-Frequenz ausrichten. Dies reicht in den meisten Fällen aus, weil ein Kalander auf bestimmte Produktionsparameter (Streckenlast, Walzenoberflächentemperaturen, Geschwindigkeit) hin ausgelegt ist. In manchen Fällen möchte man jedoch die Produktionsparameter des Kalanders flexibel gestalten. Mit veränderten Produktionsparametern ändern sich aber auch die Eigenfrequenzen geringfügig. In diesem Fall ist es vorteilhaft, die Tilgerfrequenzen entsprechend zu ändern. Eine Veränderung von außen bedeutet, daß die Walze zur Veränderung der Tilgerfrequenz nicht demontiert werden muß, sondern Mittel vorgesehen sind, die beispielsweise mit Hilfe einer Fernsteuerung die Tilgerfrequenz verändern können.

Hierbei ist bevorzugt, daß der Schwingungstilger eine Federeinrichtung aufweist, deren Steifigkeit gesteuert veränderbar ist. Im Falle der elastischen Scheibe läßt sich dies beispielsweise dadurch erreichen, daß die Scheibe in Axialrichtung mehr oder weniger komprimiert wird, wobei durch die Kompression natürlich die Verlagerungsmöglichkeit des Massenelements innerhalb des Walzenmantels nicht nennenswert beschränkt werden darf.

In einer alternativen Ausgestaltung ist vorgesehen, daß die Tilgeranordnung Schwingungstilger mit unterschiedlichen Tilgerfrequenzen aufweist. Bei der Existenz mehrerer relevanter Kontakteigenfrequenzen für die Barring-Bildung können auch mehrere Schwingungstilger mit unterschiedlicher Eigenfrequenz und somit an unterschiedlichen Positionen im Inneren einer Walze eingesetzt werden. Die unterschiedlichen Positionen sind die Folge unterschiedlicher Schwingungsformen.

Die Aufgabe wird bei einem Kalander der eingangs genannten Art dadurch gelöst, daß im Innenraum eine Tilgeranordnung mit mindestens einem passiven Schwingungstilger angeordnet ist.

Die Tilgeranordnung ist also in der Lage, die Frequenzen zu "dämpfen", bei denen die Gefahr einer Barring-Bildung besteht. Dadurch wird die Standzeit der Walze verlängert. Da es sich um einen passiven Schwingungstilger handelt, ist keine Energiezufuhr oder Steuerung von außen erforderlich.

Die Erfindung wird im folgenden anhand von bevorzugten Ausführungsbeispielen in Verbindung mit der Zeichnung näher beschrieben. Hierin zeigen:
- Fig. 1: eine schematische Ansicht eines Kalanders,
- Fig. 2: eine Schnittansicht einer ausgelenkten Mit- telwalze im Längsschnitt,
- Fig. 3: eine schematische Darstellung zur Erläuterung eines Schwingungstilgers in verschiedenen Ausführungsformen,
- Fig. 4: eine Walze mit Schwingungstilger im auszugs- weisen Längsschnitt,
- Fig. 5: ein Schnitt V-V nach Fig. 4,
- Fig. 6: eine gegenüber Fig. 2 abgewandelte Ausfüh- rungsform einer Mittelwalze mit Schwin- gungstilger,
- Fig. 7: eine spezielle Ausgestaltung der Ausführungs- form nach Fig. 6,
- Fig. 8: eine alternative Lagerung des Schwingungstil- gers im Walzenmantel,
- Fig. 9: eine weitere abgewandelte Ausführungsform ei- nes Schwingungstilgers und
- Fig. 10: eine zusätzliche Ausführungsform eines Schwingungstilgers.

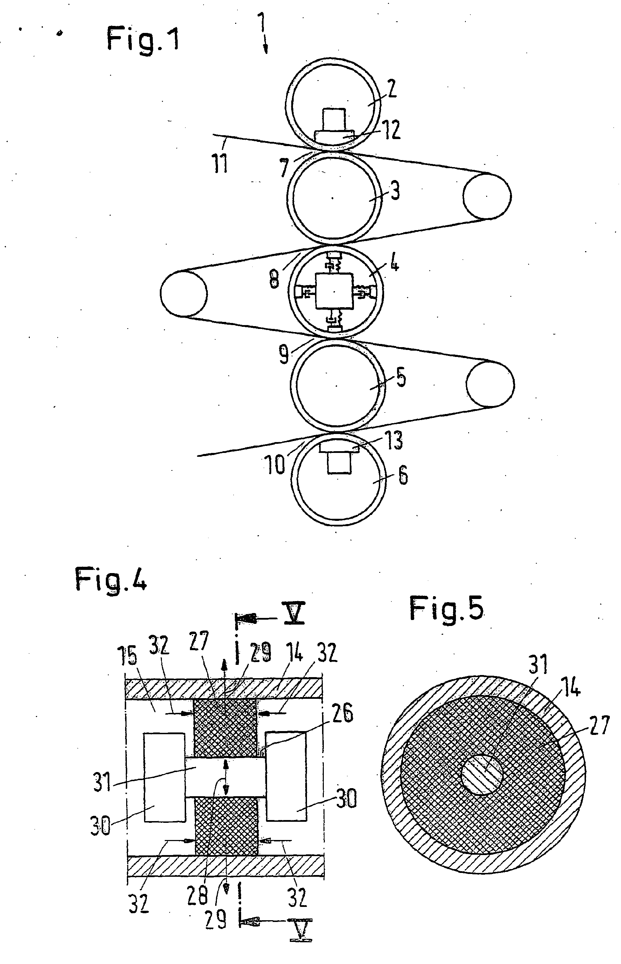

Fig. 1 zeigt einen Kalander 1 mit einem Walzenstapel aus fünf Walzen 2-6, die zwischen sich vier Nips 7-10 ausbilden, durch die eine Materialbahn 11, beispielsweise eine Papierbahn oder eine Kartonbahn, geführt ist. Die Nips 7-10 sind als sogenannte weiche Nips ausgebildet, d.h. sie sind jeweils durch eine weiche Walze 2, 4, 6, d.h. eine Walze mit einem elastischen Belag aus einem Kunststoff (nicht näher dargestellt), und einer harten Walze 3, 5, d.h. einer Walze mit einer Oberfläche aus Metall, gebildet.

Die beiden Endwalzen 2, 6 sind als Durchbiegungseinstellwalzen ausgebildet, d.h. sie weisen hydrostatische Stützelemente 12, 13 auf, die in Axialrichtung der Walzen 2, 6 verteilt angeordnet sind.

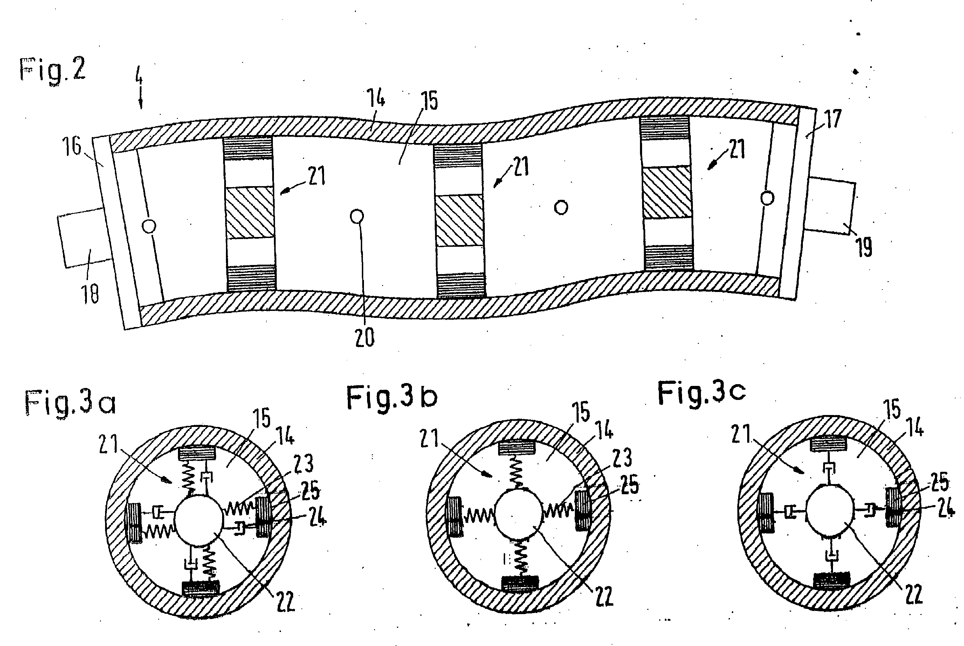

Die Mittelwalzen 3-5 sind ohne derartige Stützelemente ausgebildet. Wie aus Fig. 2 zu erkennen ist, die schematisch die Mittelwalze 4 darstellt, weisen die Mittelwalzen einen Walzenmantel 14 auf, der einen Innenraum 15 umgibt. Der Innenraum 15 ist stirnseitig durch Walzenzapfen 16, 17 abgeschlossen, an denen Wellenstummel 18, 19 befestigt sind, mit denen die Walze 4 drehbar in einer nicht näher dargestellten Stuhlung gelagert ist.

Der Kalander 1 ist im vorliegenden Fall auf eine bestimmte Betriebsgeschwindigkeit ausgelegt, d.h. die Walzen 2-6 haben eine feste Betriebsdrehzahl oder Drehfrequenz. Aufgrund von Störungen im Kalander 1, die sich in der Regel nicht restlos beseitigen lassen, beispielsweise Inhomogenitäten, Anisotropien oder Geometriefehlern, oder Störungen, die über die Bahn 11 in den Kalander eingetragen werden, beispielsweise Papierdickenschwankungen oder Flächengewichtsschwankungen, ergeben sich Schwingungen im Kalander, die eine Vielzahl von Frequenzen enthalten, also in der Regel ein breitbandiges Rauschen bilden. Trifft jedoch eine der Erregerfrequenzen auf eine Eigenfrequenz des Kalanders oder eines Teils davon, so antwortet das Schwingungssystem mit vergrößerten Schwingungsausschlägen. Aufgrund der Vielzahl der möglichen Erreger und der Vielzahl der möglichen Eigenschwingungsformen lassen sich diese Resonanzstellen konstruktiv nicht umgehen. In der Regel ist das Schwingungssystem auch so stark gedämpft und die Erregerkräfte sind so klein, daß die resultierenden Schwingbewegungen unmittelbar nicht stören. Über einen mehr oder weniger langen Zeitraum prägen sich diese Schwingbewegungen jedoch in die Kunststoffbeläge der elastischen Walzen 2, 4, 6 ein.

Üblicherweise werden die zur Eigenfrequenz nächstliegenden ganzzahligen Vielfachen der Walzendrehfrequenz als Muster auf den elastischen Walzen 2, 4, 6 eingeprägt. Hierdurch wird eine Rückkopplung der Schwingung erzeugt. Die Schwingungsausschläge nehmen dann exponentiell zu. Sie äußern sich einerseits in einem erhöhten Schallpegel bis mehr als 120 dB(A) und andererseits in periodischen Dickenschwankungen der durchlaufenden Papierbahn, die sich wiederum als Streifen zeigen, sogenannte Barrings. Die Zeiträume, die vergehen, bis sich derartige Erscheinungen so stark zeigen, daß die Bahn 11 Ausschuß wird, sind unterschiedlich. Meist vergehen einige Tage oder Wochen.

Zu den Schwingungen, denen die Walzen ausgesetzt sind und die später zu der Barring-Bildung führen, gehören Eigenformen. Diese liegen meist in einem Frequenzbereich, bei dem die Walzenmäntel schon in Oberschwingungsformen schwingen. Dies ist beispielhaft in Fig. 2 dargestellt. Der Walzenmantel 14 bildet hier drei Schwingungsbäuche aus, zwischen denen sich Schwingungsknoten 20 befinden, die als Kreise markiert sind. Vereinfacht ausgedrückt läßt sich sagen, daß die Walze 4 an den Schwingungsknoten 20 ortsfest bleibt, während sie an den Schwingungsbäuchen schwingt. Dies läßt sich beispielsweise daran erkennen, daß bei einer Barring-Bildung die Querstreifen über die Papierbahn nicht gleichförmig durchgehen, sondern im Bereich der Schwingungsbäuche besonders intensiv ausgeprägt sind.

Anstelle der dargestellten drei Schwingungsbäuche kann die Walze 4 natürlich auch mehr Schwingungsbäuche aufweisen, beispielsweise fünf oder sieben oder auch eine geradzahlige Anzahl von Schwingungsbäuchen, beispielsweise vier oder sechs.

Um die Schwingungen zu dämpfen, ist im Innenraum 15 der Walze 4 eine Tilgeranordnung mit mehreren, im vorliegenden Fall drei Schwingungstilgern 21, angeordnet. Prinzipiell reicht ein Schwingungstilger aus, beispielsweise am Schwingungsbauch in der axialen Mitte. Es ist aber von Vorteil, wenn jeder Schwingungsbauch mit einem passiven Schwingungstilger versehen ist. Die Funktion des Schwingungstilgers ist schematisch in Fig. 3a dargestellt. Der passive Schwingungstilger 21 weist eine Masse 22 auf, die jeweils über ein Federglied 23 und ein Dämpfungsglied 24 mit einer Abstützung 25 verbunden ist, die sich von innen am Walzenmantel 14 abstützt. Um zu zeigen, daß sich die Masse 22 in alle Richtungen am Walzenmantel 14 abstützt, sind für vier Richtungen entsprechende Feder- und Dämpfungsglieder 23, 24 eingezeichnet. Idealerweise ergibt sich aber eine isotrope Abstützung über den gesamten Innenumfang des Walzenmantels 14.

Fig. 3b zeigt eine abgewandelte Ausführung, bei der die Masse 22 nur über Federn 23 am Walzenmantel 14 abgestützt ist. Die Federn 23 können eine gewisse Eigendämpfung aufweisen.

Fig. 3c zeigt eine Ausgestaltung, bei der die Masse 22 nur über Dämpfungsglieder 24 am Walzenmantel 14 abgestützt ist. Die beiden letztgenannten Ausführungsformen sind im allgemeinen weniger wirksam als die in Fig. 3a dargestellte, in der Regel aber noch brauchbar, um die Barring-Bildung zu verzögern.

Mit der Wahl entsprechender Federkonstanten des Federglieds 23, Dämpfungskonstanten des Dämpfungsglieds 24 und einer Masse 22 läßt sich eine Tilgerfrequenz einstellen. Diese Tilgerfrequenz ist auf die Barring-Frequenz abgestimmt, die sich im Betrieb ergeben kann, wie im folgenden gezeigt wird:

Man ermittelt zunächst die Kontakteigenfrequenz unter Berücksichtigung der Strukturdämpfung. Diese Ermittlung kann durch Berechnung oder Messung erfolgen. Danach berechnet man die nächstliegenden ganzzahligen Vielfachen der Walzendrehzahl unterhalb einer Kontakteigenfrequenz. Dabei ist je nach Schwingungsform zwischen geraden und ungeraden ganzzahligen Vielfachen zu unterscheiden. Je nach Höhe der vorliegenden Strukturdämpfung müßten nächstliegende Vielfache unterhalb der Kontakteigenfrequenz übersprungen werden.

Dies soll anhand eines fiktiven Beispiels erläutert werden: Die Kontakteigenfrequenz fe beträgt 351,5 Hz. Die Walzendrehzahl fw beträgt 8 Hz. Daraus ergibt sich ein Verhältnis fe/fw = 351,5 Hz / 8 Hz = 43,9375.

Bei einem Systemdämpfungsgrad D = 0,005 ergeben sich 43 Wellen, auf die der Schwingungstilger 21 ausgelegt werden muß. Bei einem Systemdämpfungsgrad D = 0,02 ergeben sich 41 Wellen und bei einem Systemdämpfungsgrad D = 0,05 ergeben sich 39 Wellen. Dieses Verhalten ist durch den dämpfungsgradabhängigen Phasenwinkel zwischen der Barring-bedingten Wegerregung und des Systemverhaltens der Walzenantwort zu begründen.

Danach legt man die Eigenfrequenzen der Tilgereinheiten, d.h. die Tilgerfrequenzen, auf diese zu erwartenden Barring-Frequenzen (Walzendrehzahl x Wellenanzahl) aus. Durch die gezielte Gestaltung der lokalen Dämpfung der Tilgereinheiten können begrenzte Frequenzverschiebungen durch Drehzahlvariationen der Walzen kompensiert werden. Im Grunde genommen ist aber die Tilgerfrequenz für eine bestimmte Eigenfrequenz konzipiert. Man positioniert dann die einzelnen Tilgereinheiten oder Schwingungstilger 21 im Innenraum 15 des Walzenmantels 14 an Punkten vorliegender Schwingungsbäuche. Bei der Existenz mehrerer relevanter Kontakteigenfrequenzen für die Barring-Bildung können auch mehrere Schwingungstilger 21 mit unterschiedlichen Eigenfrequenzen und somit auch an unterschiedlichen Positionen im Innenraum 15 der Walze eingesetzt werden.

Für eine an die Produktionsparameter weitgehend flexibel anpaßbare Tilgung der sich entwickelnden Barring-Frequenzen kann die Eigenfrequenz der Schwingungstilger 21 variabel gestaltet werden. Dies kann durch eine ferngesteuerte Veränderung der Federsteifigkeiten erfolgen.

Ein Beispiel für einen konkret ausgeführten Schwingungstilger 21 ist in den Fig. 4 und 5 dargestellt.

Der Schwingungstilger 21 weist als Masse ein hantelförmiges Massenelement 26 auf, das in einer Scheibe 27 aus einem elastischen Material gelagert ist. Die Scheibe 27 wiederum stützt sich von innen am Walzenmantel 14 ab und zwar über den gesamten Umfang des Walzenmantels 14. Die Scheibe 27 hat dabei in alle Richtungen ein gleiches Kompressions- und Dämpfungsverhalten. Die Scheibe 27 bildet also in sich die Feder- und Dämpfungsglieder 23, 24 aus.

Wie durch einen Pfeil 28 angedeutet ist, ist das Massenelement 26 aufgrund der Elastizität der Scheibe 27 verlagerbar. Bei einer richtigen Auslegung wirkt die Bewegung des Massenelements 26 einer durch Pfeile 29 dargestellten Bewegung des Walzenmantels 14 entgegen. Dadurch ergibt sich eine passive Schwingungsdämpfung des Walzenmantels 14.
Das Massenelement 26 ist hantelförmig ausgebildet, d.h. es weist zwei Bereiche 30 mit vergrößertem Durchmesser auf, die sich außerhalb der Scheibe 27 befinden. Diese beiden vergrößerten Bereiche 30 sind durch eine Verbindungsstange 31 miteinander verbunden. Dadurch läßt sich die Masse des Massenelements 26 vergrößern. Dennoch steht in der Scheibe 27 genügend elastisches Material zur Verfügung, so daß das Massenelement 26 in ausreichendem Maße verlagert werden kann.

Durch Pfeile 32 sind Mittel angedeutet, mit denen die Scheibe 27 in Axialrichtung zusammengedrückt werden kann, um ihre Federsteifigkeit zu verändern. Diese Mittel dürfen allerdings die Beweglichkeit des Massenelements 26 in Radialrichtung nicht behindern. Durch die Veränderung der Federsteifigkeit läßt sich die Tilgerfrequenz verändern.

Mit dem Schwingungstilger ist es also auf relativ einfache Weise möglich, Schwingungen des Walzenmantels 14 ohne Zufuhr äußerer Energie zu dämpfen. Die Dämpfung wird das Ausbilden von Barrings zwar in einigen Fällen nicht restlos verhindern. Die Zeit, die bis zur kritischen Ausbildung von Barring-Mustern erfolgt, kann aber deutlich verlängert werden.

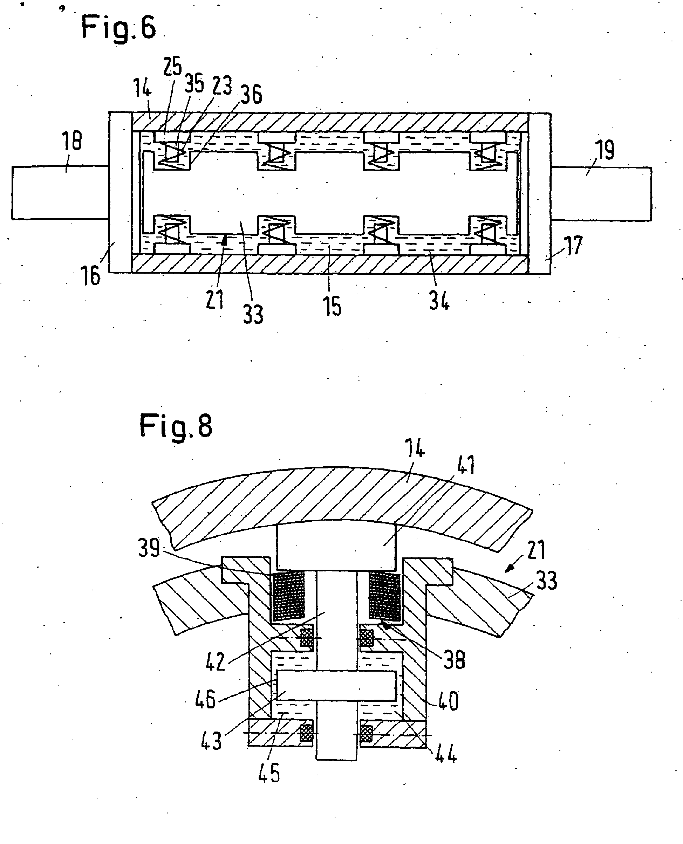

Fig. 6 zeigt eine gegenüber Fig. 2 oder 4 abgewandelte Ausführungsform einer Walze, bei dem der Schwingungstilger 21 als walzenförmiger Einschubkörper 33 ausgebildet ist. Der Einschubkörper 33 weist eine Masse auf, die mindestens 15 % oder sogar 20 % der Masse des Walzenmantels 14 entspricht und erstreckt sich praktisch über die gesamte axiale Länge des Walzenmantels 14. In dem Innenraum 15 ist eine Flüssigkeit 34 angeordnet, beispielsweise ein hochviskoses und damit zähflüssiges Öl, das Dämpfungseigenschaften bei der Bewegung des Einschubkörpers 33 gegenüber dem Walzenmantel 14 bewirkt. Der Einschubkörper 33 ist über Federn 23 am Walzenmantel 14 abgestützt, wobei die Federn auf einer Abstützung 25 gehalten sind, die einen Stützvorsprung 35 aufweisen. Die Federn 23 greifen in topfartige Ausnehmungen 36 am Umfang des Einschubkörpers 33 ein. Damit ist für den Einschubkörper 33 im Walzenmantel 14 ein kleiner rotatorischer Freiheitsgrad gegeben, d.h. der Einschubkörper 33 kann sich in einem kleinen Winkelbereich um eine Neutralstellung gegenüber dem Walzenmantel 14 hin und her drehen.

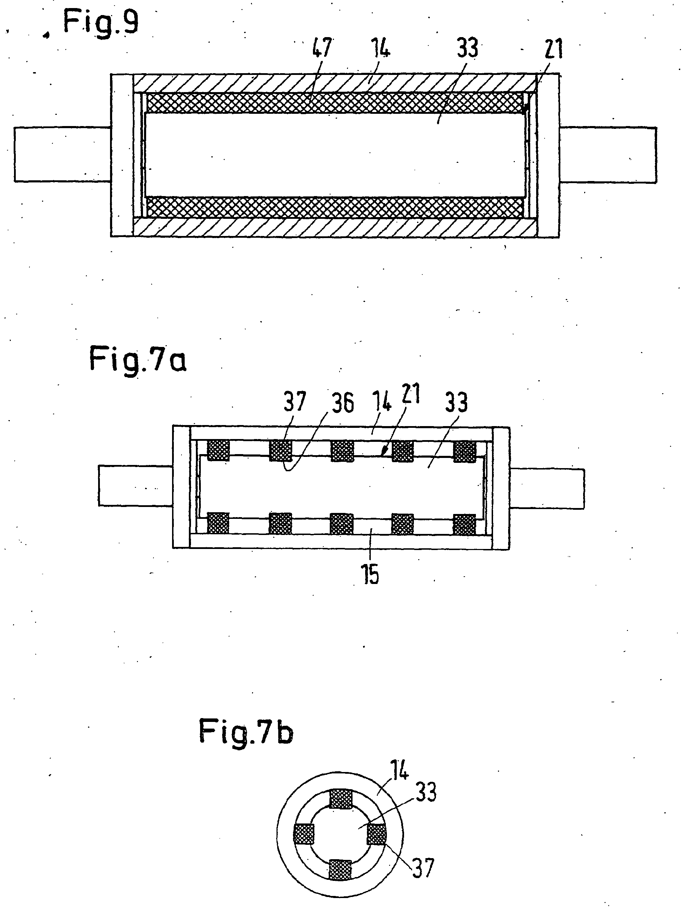

Fig. 7 zeigt eine abgewandelte Ausgestaltung. Gleiche und funktionsgleiche Elemente sind mit den gleichen Bezugszeichen versehen.

Die Abstützung des Einschubkörpers 33 im Walzenmantel 14 erfolgt über Stützelemente 37, die aus einem viskoelastischen Material gebildet sind, beispielsweise aus einem Gummi oder einem vergleichbaren Kunststoff. Die Stützelemente 37 übernehmen also gleichzeitig die Funktion einer Feder und die Funktion eines Dämpfers. Hier erfolgt lediglich eine Fixierung der Stützelemente 37 auf dem Einschubkörper 33. Im Innern des Walzenmantels 14 werden die Stützelemente 37 durch ihre eigene Spannkraft gehalten, d.h. hier müssen keine eigenen Befestigungsgeometrien vorgesehen sein.

Fig. 8 zeigt eine Alternative, bei der der walzenförmige Einschubkörper 33 über ein Federpaket 38 im Walzenmantel 14 gehalten ist. Das Federpaket 18 besteht aus einer Vielzahl von Tellerfedern 39. Das Federpaket 38 ist eingespannt zwischen einem Einsatz 40, der im Einschubkörper 33 befestigt ist, und einem Stempel 41, der von innen am Walzenmantel 14 anliegt. Ein Fortsatz 42 des Stempels 41, der sich radial nach innen erstreckt, durchragt das Federpaket 38.

Die Tellerfedern 39 des Federpakets 38 haben an sich schon ein relativ gutes Dämpfungsverhalten. Das Dämpfungsverhalten der Abstützung kann noch verbessert werden, wenn am Fortsatz 42 eine Erweiterung 43 angeordnet ist, die in eine Dämpfungskammer 44 eintaucht, die mit einer Flüssigkeit 45 gefüllt ist. Wenn sich der Stempel 41 gegenüber dem Einsatz 40 bewegt, dann muß die Flüssigkeit 45 durch einen Ringspalt 46 in der Dämpfungskammer 44 treten, was eine verbesserte Dämpfungswirkung zur Folge hat.

Bei der in Fig. 9 dargestellten Ausführungsform ist der Einschubkörper 33 im Walzenmantel 14 durch eine Zwischenschicht 47 aus einem viskoelastischen Material, beispielsweise einem Gummi oder einem vergleichbaren Kunststoff, gehalten. Die Befestigung des Einschubkörpers 33 im Walzenmantel 14 erfolgt dadurch, daß der walzenförmige Einschubkörper 33 einschließlich der umschließenden Zwischenschicht 47 in den Walzenmantel 14 eingeschrumpft wird.

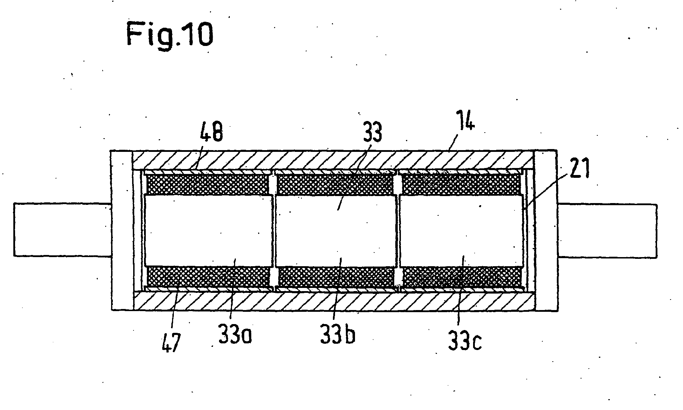

Bei der Ausgestaltung nach Fig. 10 ist zu erkennen, daß der Einschubkörper 33 in mehrere Abschnitte 33a, 33b, 33c unterteilt ist. Jeder dieser Abschnitte ist von einer Zwischenschicht 47 umgeben. Die Zwischenschicht 47 ist wiederum von einem Rohr 48 aus Metall umgeben, das im eingebauten Zustand zwischen der Zwischenschicht 47 und dem Walzenmantel 14 angeordnet ist. Ein derartiges Rohr 48 erleichtert das Einschrumpfen. Man kann dieses Rohr vor dem Einsetzen des Einschubkörpers 33 in den Walzenmantel 14 abkühlen, so daß die Zwischenschicht 47 komprimiert wird. Der Walzenmantel 14 muß dann nur noch in einem geringeren Umfang erwärmt werden, um sich aufzuweiten, bevor man den mit dem Rohr 48 versehenen Einschubkörper 33 bzw. dessen Einzelteile 33a-33c in den Walzenmantel 14 einschieben kann.

## Patentansprüche

1. Kalandermittelwalze mit einem Walzenmantel (14), der einen Innenraum (15) umgibt, **dadurch gekennzeichnet, daß** im Innenraum (15) eine Tilgeranordnung mit mindestens einem passiven Schwingungstilger (21) angeordnet ist, wobei der Schwingungstilger (21) eine Tilgerfrequenz aufweist, die unterhalb einer für eine Barring-Bildung ausschlaggebenden Eigenfrequenz der Walze (3-5) oder eines die Walze enthaltenden Walzensystems (1) liegt.

2. Walze nach Anspruch 1, **dadurch gekennzeichnet, daß** der Schwingungstilger (21) auf den Walzenmantel (14) wirkt, insbesondere gedämpft auf den Walzenmantel wirkt.

3. Walze nach Anspruch 1 oder 2, **dadurch gekennzeichnet, daß** der Schwingungstilger (21) eine Masse (22) aufweist, die mindestens 15 %, insbesondere mindestens 20% der Masse des Walzenmantels (14) beträgt.

4. Walze nach einem der Ansprüche 1 bis 3, **dadurch gekennzeichnet, daß** der Schwingungstilger in Axialrichtung des Walzenmantels (14) an einer Position angeordnet ist, an der sich im Betrieb ein Schwingungsbauch ausbildet.

5. Walze nach Anspruch 4, **dadurch gekennzeichnet, daß** der Schwingungstilger (21) in mehrere Einzeltilger unterteilt ist, die in Axialrichtung verteilt an Positionen angeordnet sind, an denen sich im Betrieb jeweils ein Schwingungsbauch ausbildet.

6. Walze nach Anspruch 5, **dadurch gekennzeichnet, daß** an allen Schwingungsbäuchen ein Einzeltilger (21) angeordnet ist.

7. Walze nach einem der Ansprüche 1 bis 6, **dadurch gekennzeichnet, daß** die Tilgerfrequenz auf eine Barring-Frequenz abgestimmt ist.

8. Walze nach einem der Ansprüche 1 bis 7, **dadurch gekennzeichnet, daß** der Schwingungstilger (21) als walzenförmiger Einschubkörper (33) ausgebildet ist.

9. Walze nach einem der Ansprüche 1 bis 8, **dadurch gekennzeichnet, daß** der Schwingungstilger (21) über eine Federanordnung (23, 37, 38) im Walzenmantel (14) abgestützt ist.

10. Walze nach Anspruch 9, **dadurch gekennzeichnet, daß** die Federanordnung (38) mehrere Tellerfedern (39) aufweist.

11. Walze nach einem der Ansprüche 1 bis 10, **dadurch gekennzeichnet, daß** zwischen dem Schwingungstilger (21) und dem Walzenmantel eine Dämpferanordnung (24) vorgesehen ist.

12. Walze nach Anspruch 11, **dadurch gekennzeichnet, daß** die Dämpferanordnung und die Federanordnung miteinander kombiniert sind.

13. Walze nach Anspruch 12, **dadurch gekennzeichnet, daß** der Schwingungstilger (21) über mindestens eine Stütze (37) aus elastomerem Material am Walzenmantel (14) abgestützt ist.

14. Walze nach einem der Ansprüche 1 bis 13, **dadurch gekennzeichnet, daß** der Schwingungstilger (21) gegenüber dem Walzenmantel (14) in einem rotatorischen Freiheitsgrad bewegbar ist.

15. Walze nach Anspruch 14, **dadurch gekennzeichnet, daß** die Drehbewegung des Schwingungstilgers (21) gegenüber dem Walzenmantel (14) begrenzt ist.

16. Walze nach einem der Ansprüche 1 bis 15, **dadurch gekennzeichnet, daß** der Innenraum (18) zumindest in einem Bereich zwischen dem Schwingungstilger (21) und dem Walzenmantel (14) mit einer Flüssigkeit (34) gefüllt ist, deren Viskosität ein vorbestimmtes Mindestmaß überschreitet.

17. Walze nach einem der Ansprüche 1 bis 15, **dadurch gekennzeichnet, daß** der Schwingungstilger (21) mit einer umschließenden Zwischenschicht (47) aus einem viskoelastischen Material in den Walzenmantel (14) eingeschrumpft ist.

18. Walze nach Anspruch 17, **dadurch gekennzeichnet, daß** zwischen dem Walzenmantel (14) und der Zwischenschicht (47) ein Rohr (48) angeordnet ist.

19. Walze nach einem der Ansprüche 1 bis 18, **dadurch gekennzeichnet, daß** der Schwingungstilger (21) ein Massenelement (26) aufweist, das in mindestens einer Scheibe (27) aus einem elastischen Material gelagert ist, die am Mantel (14) abgestützt ist.

20. Walze nach Anspruch 19, **dadurch gekennzeichnet, daß** die Scheibe (27) über ihren gesamten Umfang am Mantel (14) anliegt.

21. Walze nach Anspruch 19 oder 20, **dadurch gekennzeichnet, daß** das Massenelement (26) in Axialrichtung über die Scheibe (27) hinausragt.

22. Walze nach Anspruch 21, **dadurch gekennzeichnet, daß** das Massenelement (26) jeweils außerhalb der Scheibe (27) eine Vergrößerung (30) aufweist.

23. Walze nach einem der Ansprüche 1 bis 22, **dadurch gekennzeichnet, daß** der Schwingungstilger (21) eine von außen veränderbare Tilgerfrequenz aufweist.

24. Walze nach Anspruch 23, **dadurch gekennzeichnet, daß** der Schwingungstilger (21) eine Federeinheit aufweist, deren Steifigkeit gesteuert veränderbar ist.

25. Walze nach einem der Ansprüche 1 bis 24, **dadurch gekennzeichnet, daß** die Tilgeranordnung Schwingungstilger (21) mit unterschiedlichen Tilgerfrequenzen aufweist.

26. Kalander (1) mit einem Walzenstapel, der mindestens zwei Mittelwalzen (3-5) aufweist, von denen mindestens eine einen Walzenmantel (14) aufweist, der einen Innenraum (15) umgibt, **dadurch gekennzeichnet, daß** im Innenraum (15) eine Tilgeranordnung mit mindestens einem passiven Schwingungstilger (21) angeordnet ist, wobei der Schwingungstilger (21) eine Tilgerfrequenz aufweist, die unterhalb einer für eine Barring-Bildung ausschlaggebenden Eigenfrequenz der Walze (3-5) oder eines die Walze enthaltenden Walzensystems (1) liegt.

## Claims

1. Intermediate calender roll having a roll shell (14) that surrounds an internal space (15), **characterized in that** in the internal space (15) there is arranged a damper assembly having at least one passive oscillation damper (21), the oscillation damper (21) having a damper frequency which lies below a natural frequency of the roll (3-5), or a roll system (1) containing the roll, that is critical for the formation of barring.

2. Roll according to Claim 1, **characterized in that** the oscillation damper (21) acts on the roll shell (14), in particular acts on the roll shell in a damped manner.

3. Roll according to Claim 1 or 2, **characterized in that** the oscillation damper (21) has a mass (22) which is at least 15%, in particular at least 20%, of the mass of the roll shell (14).

4. Roll according to one of Claims 1 to 3, **characterized in that**, in the axial direction of the roll shell (14), the oscillation damper is arranged at a position at which a bulge is formed during operation.

5. Roll according to Claim 4, **characterized in that** the oscillation damper (21) is subdivided into a plurality of individual dampers which, distributed in the axial direction, are arranged at positions at which in each case a bulge is formed during operation.

6. Roll according to Claim 5, **characterized in that** an individual damper (21) is arranged at all the bulges.

7. Roll according to one of Claims 1 to 6, **characterized in that** the damper frequency is tuned to a barring frequency.

8. Roll according to one of Claims 1 to 7, **characterized in that** the oscillation damper (21) is constructed as a roll-shaped insert (33).

9. Roll according to one of Claims 1 to 8, **characterized in that** the oscillation damper (21) is supported in the roll shell (14) via a spring assembly (23, 37, 38).

10. Roll according to Claim 9, **characterized in that** the spring assembly (38) has a plurality of disc springs (39).

11. Roll according to one of Claims 1 to 10, **characterized in that** a dashpot arrangement (24) is arranged between the oscillation damper (21) and the roll shell.

12. Roll according to Claim 11, **characterized in that** the dashpot arrangement and the spring assembly are combined with each other.

13. Roll according to Claim 12, **characterized in that** the oscillation damper (21) is supported on the roll shell (14) via at least one support (37) made of elastomer material.

14. Roll according to one of Claims 1 to 13, **characterized in that** the oscillation damper (21) can be moved with respect to the roll shell (14) with one degree of rotational freedom.

15. Roll according to Claim 14, **characterized in that** the rotational movement of the oscillation damper (21) with respect to the roll shell (14) is limited.

16. Roll according to one of Claims 1 to 15, **characterized in that**, at least in a region between the oscillation damper (21) and the roll shell (14), the internal space (15) is filled with liquid (34), the viscosity of which exceeds a predetermined minimum amount.

17. Roll according to one of Claims 1 to 15, **characterized in that** the oscillation damper (21) is shrunk into the roll shell (14) with an enclosing intermediate layer (47) made of a viscoelastic material.

18. Roll according to Claim 17, **characterized in that** a pipe (48) is arranged between the roll shell (14) and the intermediate layer (47).

19. Roll according to one of Claims 1 to 18, **characterized in that** the oscillation damper (21) has a mass element (26) which is mounted in at least one disc (27) of a resilient material that is supported on the shell (14).

20. Roll according to Claim 19, **characterized in that** the disc (27) bears on the shell (14) over its entire circumference.

21. Roll according to Claim 19 or 20, **characterized in that** the mass element (26) projects beyond the disc (27) in the axial direction.

22. Roll according to Claim 21, **characterized in that** the mass element (26) in each case has an enlarged section (30) outside the disc (27).

23. Roll according to one of Claims 1 to 22, **characterized in that** the oscillation damper (21) has a damper frequency that can be varied from outside.

24. Roll according to Claim 23, **characterized in that** the oscillation damper (21) has a spring unit, the stiffness of which can be varied under control.

25. Roll according to one of Claims 1 to 24, **characterized in that** the damper assembly has oscillation dampers (21) with different damper frequencies.

26. Calender (1) having a roll stack which has at least two intermediate rolls (3-5), of which at least one has a roll shell (14) that surrounds an internal space (15), **characterized in that** in the internal space (15) there is arranged a damper assembly having at least one passive oscillation damper (21), the oscillation damper (21) having a damper frequency which lies below a natural frequency of the roll (3-5) , or a roll system (1) containing the roll, that is critical for the formation of barring.

## Revendications

1. Cylindre médial de calandre comprenant une enveloppe de cylindre (14), qui entoure un espace interne (15), **caractérisé en ce qu'**un agencement d'amortisseur avec au moins un amortisseur d'oscillations passif (21) est disposé dans l'espace interne (15), l'amortisseur d'oscillations (21) présentant une fréquence d'amortisseur qui se situe en dessous d'une fréquence propre du cylindre (3-5) ou d'un système de cylindre (1) contenant le cylindre, qui est déterminante pour une formation de stries.

2. Cylindre selon la revendication 1, **caractérisé en ce que** l'amortisseur d'oscillations (21) agit sur l'enveloppe du cylindre (14), notamment agit de manière amortie sur l'enveloppe du cylindre.

3. Cylindre selon la revendication 1 ou 2, **caractérisé en ce que** l'amortisseur d'oscillations (21) présente une masse (22) qui vaut au moins 15%, notamment au moins 20% de la masse de l'enveloppe du cylindre (14).

4. Cylindre selon l'une quelconque des revendications 1 à 3, **caractérisé en ce que** l'amortisseur d'oscillations est disposé dans la direction axiale de l'enveloppe du cylindre (14) dans une position dans laquelle un ventre d'oscillation se forme pendant le fonctionnement.

5. Cylindre selon la revendication 4, **caractérisé en ce que** l'amortisseur d'oscillations (21) est divisé en plusieurs amortisseurs individuels, qui sont disposées de manière répartie dans la direction axiale dans des positions au niveau desquelles se forme à chaque fois un ventre d'oscillation pendant le fonctionnement.

6. Cylindre selon la revendication 5, **caractérisé en ce qu'**un amortisseur individuel (21) est disposé au niveau de tous les ventres d'oscillation.

7. Cylindre selon l'une quelconque des revendications 1 à 6, **caractérisé en ce que** la fréquence de l'amortisseur est adaptée à une fréquence de formation de barres.

8. Cylindre selon l'une quelconque des revendications 1 à 7, **caractérisé en ce que** l'amortisseur d'oscillations (21) est réalisé sous forme de corps d'insertion en forme de cylindre (33).

9. Cylindre selon l'une quelconque des revendications 1 à 8, **caractérisé en ce que** l'amortisseur d'oscillations (21) est supporté dans l'enveloppe du cylindre (14) par le biais d'un agencement de ressort (23, 37, 38).

10. Cylindre selon la revendication 9, **caractérisé en ce que** l'agencement de ressort (38) présente plusieurs ressorts Belleville (39).

11. Cylindre selon l'une quelconque des revendications 1 à 10, **caractérisé en ce qu'**un agencement d'amortissement (24) est prévu entre l'amortisseur d'oscillations (21) et l'enveloppe du cylindre.

12. Cylindre selon la revendication 11, **caractérisé en ce que** l'agencement d'amortissement et l'agencement de ressort sont combinés l'un à l'autre.

13. Cylindre selon la revendication 12, **caractérisé en ce que** l'amortisseur d'oscillations (21) est supporté sur l'enveloppe du cylindre (14) par le biais d'au moins un support (37) en matériau élastomère.

14. Cylindre selon l'une quelconque des revendications 1 à 13, **caractérisé en ce que** l'amortisseur d'oscillations (21) peut être déplacé par rapport à l'enveloppe du cylindre (14) avec un degré de liberté en rotation.

15. Cylindre selon la revendication 14, **caractérisé en ce que** le mouvement de rotation de l'amortisseur d'oscillations (21) est limité par rapport à l'enveloppe du cylindre (14).

16. Cylindre selon l'une quelconque des revendications 1 à 15, **caractérisé en ce que** l'espace interne (15) est rempli au moins dans une région entre l'amortisseur d'oscillations (21) et l'enveloppe du cylindre (14) avec un liquide (34) dont la viscosité dépasse une valeur minimale prédéterminée.

17. Cylindre selon l'une quelconque des revendications 1 à 15, **caractérisé en ce que** l'amortisseur d'oscillations (21) est contracté avec une couche intermédiaire d'enveloppement (47) en matériau viscoélastique dans l'enveloppe du cylindre (14).

18. Cylindre selon la revendication 17, **caractérisé en ce que** qu'un tube (48) est disposé entre l'enveloppe du cylindre (14) et la couche intermédiaire (47).

19. Cylindre selon l'une quelconque des revendications 1 à 18, **caractérisé en ce que** l'amortisseur d'oscillations (21) présente un élément de masse (26), qui est monté dans au moins un disque (27) en matériau élastique, qui est supporté sur l'enveloppe (14).

20. Cylindre selon la revendication 19, **caractérisé en ce que** le disque (27) s'applique sur toute sa périphérie contre l'enveloppe (14).

21. Cylindre selon la revendication 19 ou 20, **caractérisé en ce que** l'élément de masse (26) dépasse au-delà du disque (27) dans la direction axiale.

22. Cylindre selon la revendication 21, **caractérisé en ce que** l'élément de masse (26) présente à chaque fois un élargissement (30) en dehors du disque (27).

23. Cylindre selon l'une quelconque des revendications 1 à 22, **caractérisé en ce que** l'amortisseur d'oscillations (21) présente une fréquence d'amortisseur pouvant être modifiée depuis l'extérieur.

24. Cylindre selon la revendication 23, **caractérisé en ce que** l'amortisseur d'oscillations (21) présente une unité de ressort dont la rigidité peut être modifiée de manière commandée.

25. Cylindre selon l'une quelconque des revendications 1 à 24, **caractérisé en ce que** l'agencement d'amortisseur présente l'amortisseur d'oscillations (21) avec des fréquences d'amortisseur différentes.

26. Calandre (1) comprenant un empilement de cylindres, qui présente au moins deux cylindres médiaux (3-5), dont au moins l'un présente une enveloppe de cylindre (14) qui entoure un espace interne (15), **caractérisée en ce qu'**un agencement d'amortisseur avec au moins un amortisseur d'oscillations passif (21) est disposé dans l'espace interne (15), l'amortisseur d'oscillations (21) présentant une fréquence d'amortisseur qui se situe en dessous d'une fréquence propre du cylindre (3-5) ou d'un système de cylindre (1) contenant le cylindre, qui est déterminante pour une formation de stries.
